# EUROPÄISCHE PATENTSCHRIFT

(11) **EP 1 649 647 B1**
(45) Veröffentlichungstag und Bekanntmachung des Hinweises auf die Patenterteilung: **10.01.2007**
(21) Anmeldenummer: 04738859.0
(22) Anmeldetag: 05.07.2004
(51) Int. Cl.: H04L 12/66

(54) **VERFAHREN UND TELEKOMMUNIKATIONSANORDNUNG ZUR ÜBERTRAGUNG VON DATEN AUF UNTERSCHIEDLICHEN ÜBERTRAGUNGSWEGEN IN EINEM KOMMUNIKATIONS-VORGANG SOWIE TRANSMISSIONS-SERVER ZUR DURCHFÜHRUNG DES VERFAHRENS**
METHOD AND TELECOMMUNICATIONS ASSEMBLY FOR TRANSMITTING DATA ON DIFFERENT TRANSMISSION PATHS IN A COMMUNICATIONS OPERATION AND TRANSMISSION SERVER FOR CARRYING OUT SAID METHOD
PROCEDE ET DISPOSITIF DE TELECOMMUNICATION POUR LA TRANSMISSION DE DONNEES SUR DIFFERENTES VOIES DE TRANSMISSION DANS UN PROCESSUS DE COMMUNICATION, ET SERVEUR DE TRANSMISSION POUR LA MISE EN OEUVRE DE CE PROCEDE

(30) Priorität: 04.07.2003 DE 10331111
(43) Veröffentlichungstag der Anmeldung: 26.04.2006
(73) Patentinhaber: Teles AG Informationstechnologien, 10587 Berlin (DE)
(72) Erfinder: SCHINDLER, Sigram, 14129 Berlin (DE); WITKE, Marius, 10439 Berlin (DE); LÜDTKE, Karsten, 12167 Berlin (DE); HESSE, Jan, 10555 Berlin (DE)
(74) Vertreter: Müller, Wolfram Hubertus
(86) Internationale Anmeldenummer: PCT/DE2004/001430
(87) Internationale Veröffentlichungsnummer: WO 2005/006686

(56) Entgegenhaltungen:
- EP-A- 0 456 947
- WO-A-01/06718
- US-A1- 2002 083 195

## Beschreibung

Die Erfindung betrifft ein Verfahren und eine Telekommunikationsanordnung zur Übertragung von Daten auf unterschiedlichen Übertragungswegen in einem Kommunikations-Vorgang zwischen einem Anwendungs-Server und einem Endsystem sowie einen Anwendungs-Server zur Durchführung des Verfahrens.

### Hintergrund der Erfindung

Aus der DE 198 60 756 A1 ist ein Verfahren bekannt, bei dem zu übertragenden Rückkanal-Daten in einer Verbindung zwischen einem Endgerät und einem Server eines Paketvermittlungsnetzes in Abhängigkeit von dem Vorliegen eines Steuersignals entweder schmalbandig über ein Paketvermittlungsnetz und/oder POTS/ISDN-Leitungen oder breitbandig über einen BreitbandRückkanal übertragen werden. Alternativ zu einem Wechseln der Datenübertragung zwischen einer schmalbandigen und einer breitbandigen Übertragung ist vorgesehen, dass die breitbandige Übertragung der schmalbandigen Übertragung zugeschaltet wird.

Das in der DE 198 60 756 A1 beschriebene Verfahren stellt ein hohes Maß an Flexibilität bei der Wahl der Übertragungsmethode bereit. Insbesondere besteht die Möglichkeit, die Bandbreite einer Datenübertragung dynamisch entsprechend den Vorgaben eines Nutzers oder eines Netzwerkmanagements festzulegen.

In der EP 0 456 947 A1 ist ein hybrides Schaltsystem beschrieben, das das Vermitteln von paket- und leitungsbasierten Datenströmen über einen hybriden Schalter vorsieht, um parallel Paket- und Leitungsdaten zwischen Endgeräten austauschen zu können. Die Bandbreite der Verbindung durch den hybriden Schalter kann dabei dynamisch zwischen dem paket- und dem leitungsbasierten Datenstrom aufgeteilt werden.

Aus der US 2002/0083 195 A1 ist ein Verfahren zum Übertragen von Daten über eine Mehrkanalverbindung bekannt. Dabei kann bei einer Überlast eines Einzelkanals der Datenstrom auf mehrere Kanäle aufgeteilt werden.
Die durch das bekannte Verfahren erreichte Flexibilität bei der Wahl der Übertragungsmethode und der Bandbreite ist zwar grundsätzlich vorteilhaft, jedoch nicht in allen Anwendungen erforderlich. Es besteht dementsprechend ein Bedarf nach vereinfachten Verfahren, die sich durch eine besonders einfache Ausgestaltung und eine kostengünstige Infrastruktur auszeichnen, dabei jedoch ebenfalls eine breitbandige Übertragung von Rückkanal-Daten an ein Endgerät bzw. ein Endgerät ermöglichen.

### Aufgabe der Erfindung

Dementsprechend liegt der vorliegenden Erfindung die Aufgabe zugrunde, ein Verfahren zur Übertragung von Daten auf unterschiedlichen Übertragungswegen in einem Kommunikations-Vorgang zwischen einem Anwendungs-Server und einem Endgerät sowie einen Transmissions-Server zur Durchführung des Verfahrens zur Verfügung zu stellen, die sich durch eine einfache und kostengünstige Ausgestaltung auszeichnen und dabei trotzdem eine breitbandige Übertragung von Daten an ein Endgerät ermöglichen.

### Zusammenfassung der Erfindung

Diese Aufgabe wird erfindungsgemäß durch ein Verfahren mit den Merkmalen des Anspruchs 1, eine Telekommunikationsanordnung mit den Merkmalen des Anspruchs 37 und einen Transmissions-Server mit den Merkmalen des Anspruchs 38 gelöst. Bevorzugte und vorteilhafte Ausgestaltungen der Erfindung sind in den Unteransprüchen angegeben.

Danach werden für das Endgerät bestimmte Daten (Rückkanal-Daten) zunächst von einem Anwendungs-Server, auf dem an das Endgerät zu übertragende Informationen enthalten sind, an einen Transmissions-Server übertragen. In dem Transmissions-Server werden alle an das Endgerät zu übertragenden Daten in mindestens zwei Datenströme aufgeteilt, wobei die Aufteilung in zwei Datenströme bereits mit dem ersten Vorliegen von an das Endgerät zu übertragenden Daten erfolgt. Es wird dann mindestens ein Datenstrom vom Transmissions-Server zumindest auf einer Teilstrecke über das schmalbandige Netz an das Endgerät übertragen. Mindestens ein weiterer Datenstrom wird gleichzeitig dazu vom Transmissions-Server über mindestens ein Breitbandnetz zum Endgerät übertragen, wobei die gesamte Übertragungsstrecke (d.h. alle Übertragungsabschnitte eines benutzten Übertragungsweges) breitbandig sind.

Die erfindungsgemäße Lösung zeichnet sich durch den Gedanken aus, die an ein Endgerät zu übertragenden Daten stets und vom dem Anfang einer Datenübertragung an gleichzeitig über zwei unterschiedliche Übertragungswege an das Endgerät zu übertragen. Anders als bei der DE 198 60 756 A1 besteht dabei keine Wahlmöglichkeit, ob ein Rückkanal oder mehrere Rückkanäle verwendet werden. Die Daten werden zumindest auf einer Teilstrecke des Rückkanals stets sowohl über ein schmalbandiges Netz als auch über ein Breitbandnetz übertragen.

Die Verwendung zweier Datenströme ermöglicht es, eine insgesamt größere Bandbreite bei der Übertragung von Daten zu einem Endsystem bereitzustellen. Aufgrund der von Anfang an erfolgenden Aufteilung der Rückkanal-Daten in zwei Datenströme (zumindest auf je einer Teilstrecke der involvierten Netze) wird eine insgesamt breitbandige und effektive Datenübertragung an ein Endsystem bereitgestellt, ohne dass Software oder andere Telekommunikations-Infrastruktur erforderlich wäre, durch die wie bei der DE 198 60 756 A1 dynamisch Bandbreite hinzu- oder weggeschaltet werden kann. Es liegt ein vereinfachtes, aber trotzdem hoch effektives Verfahren vor.

Die erfindungsgemäße Lösung wird bevorzugt im Rahmen der Datenübertragung innerhalb einer Anwendung, insbesondere im Rahmen einer Datenübertragung innerhalb einer L7-Verbindung oder L7-Assoziation zwischen einem Endsystem und einem Anwendungs-Server realisiert, die eine von Anfang an vorliegende Gleichzeitigkeit der Übertragung von Rückkanal-Daten über unterschiedliche Netze zumindest auf Teilstrecken vorsieht.

Anwendungen alias Applikationen unterscheiden sich voneinander u.A. durch die von ihnen benutzten Protokolle, wie das IETF-konforme (IETF = Internet Engineering Task Force) http (hypertext transport protocol) und ftp (file transfer protocol) oder die proprietären Protokolle für "streaming applications". Eine Applikation wiederum besteht aus einer Schicht-7 Verbindung (Layer7- alias L7-Verbindung) gemäß dem OSI-Referenzmodell (ISO Empfehlung X.200) - jedoch nur dann, wenn sie nur einen einzigen originären Anwendungs-Kontext involviert. Involviert sie dagegen mehrere originäre Anwendungs-Kontexte so kann sie dafür auch mehrere L7-Verbindungen benutzen. Bevorzugt, aber nicht notwendigerweise, gehören die zu übertragenden Daten einer L7-Verbindung einer Applikation an.

Unter einer "L7-Assoziation" im Sinne der vorliegenden Erfindung wird jede logische Verbindung zwischen zwei Endsystemen bezeichnet, die eine Datenübertragung zwischen diesen Endsystemen ermöglicht. Neben einer L7-Verbindung gemäß dem OSI-Referenzmodell fallen unter eine L7-Assoziation insbesondere auch verbindungslose Kommunikationsbeziehungen. Bei solchen muss kein expliziter Aufbau einer Kommunikationsbeziehung vor dem Datenaustausch stattfinden und demnach auch kein Abbau nach dem Ende des Datenaustauschs. Die logische Zuordnung der Endsysteme ist vor der eigentlichen Datenübertragung erfolgt.

Unter einem Anwendungs-Server im Sinne der vorliegenden Erfindung wird jeder Server verstanden, der ein Programm oder eine Datei, allgemeiner einen Informationsinhalt besitzt, der von dem Anwendungs-Server auf einen anderen Server oder auf ein Endgerät übertragen werden kann. Bei einem Übertragen von Daten über das Internet werden die Informationsinhalte mittels eines Webbrowsers im PC eines Nutzers von dem Anwendungs-Server abgerufen.

Unter einem Transmissions-Server im Sinne der vorliegenden Erfindung wird ein Server verstanden, der eine Datenübertragung über mindestens ein Fernnetz zu einem Endgerät bereitstellt.

Des Weiteren wird darauf hingewiesen, dass es sich bei den von einem Anwendungs-Server an ein Endgerät zu übertragenden Daten um komplexe Datenstrukturen handelt, die entsprechend den einzelnen Schichten des OSI-Referenzmodelles ineinander verschachtelte Rahmen und Pakete beinhalten. Bei Betrachtung des Bit-Stroms oder Byte-Stromes der vom Anwendungs-Server zum Endgerät übertragenen Daten ist es grundsätzlich nicht möglich festzustellen, ob einzelne Bits oder Bytes des Datenstroms Steuerinformationen (z.B. Header einzelner Datenpakete oder Verschlüsselungsinformationen) repräsentieren oder aber "Nutzdaten" bzw. "Informationsdaten" (Payload) darstellen. Es ist daher sinnlos, bei der Übertragung von Daten zwischen einem Anwendungs-Server und einem Endgerät eine solche Unterscheidung vorzunehmen. Erst im Endgerät ist der Informationsgehalt der vom Anwendungs-Server übertragenen Daten wieder erkennbar.

Dementsprechend sind vom Anwendungs-Server übertragene Daten auch solche Daten, die erst auf der Übertragungsstrecke durch Verpacken der Daten in bestimmte Rahmen oder Pakete hinzugekommen sind. Im Sinne der vorliegenden Erfindung werden somit unter Daten, die von einem Anwendungs-Server an ein Endgerät übertragen werden, sämtliche Daten verstanden, die an irgendeiner Stelle im Übertragungsweg als in Richtung des Endgeräts zu übertragende Daten vorliegen, ohne dass eine Unterscheidung zwischen Informationsdaten und Steuerdaten möglich oder auch nur sinnvoll wäre. Von einem Anwendungs-Server an ein Endgerät übertragene Daten sind im Sinne der vorliegenden Erfindung dementsprechend beispielsweise auch Daten, die Steuerinformationen über eine auf einer Teilstrecke vorgenommene Datenkompression oder Datencodierung enthalten.

In einer bevorzugten Ausgestaltung der vorliegenden Erfindung erfolgt bei einem Kommunikations-Vorgang zwischen einem Anwendungs-Server und einem Endgerät eine Datenübertragung stets unter Zwischenschaltung eines Proxy-Servers. Ein Proxy-Server im Kontext des Internet ist ein Server, an den sich sämtliche Anfragen eines Endgeräts richten und der als eine Art Mittelsmann auftritt. Sofern ein Proxy-Server von einem Endgerät eine Anfrage hinsichtlich eines Internet-Dienstes erhält, etwa betreffend die Anzeige einer Webseite, ruft er die entsprechende Information von dem entsprechenden Anwendungs-Server als Stellvertreter des Endgeräts ab und leitet sie an das Endgerät weiter. Üblicherweise erfüllt ein Proxy-Server zusätzlich Sicherheits- und Verwaltungsfunktionen.

Sofern ein Proxy-Server vorgesehen ist, werden somit für das Endgerät bestimmte Daten vom Anwendungs-Server zunächst breitbandig (etwa über breitbandige Backbone-Verbindungen des Internet) an den Proxy-Server und vom Proxy-Server weiter an den Transmissions-Server geleitet, der dann die Aufteilung in mindestens zwei Datenströme vornimmt.

Bevorzugt ist der Transmissions-Server dabei Teil eines Proxy-Servers bzw. ist die Funktionalität des Transmissions-Servers in einen Proxy-Server integriert, so dass ein Gerät vorliegt, dass dann üblicherweise insgesamt als Proxy-Server bezeichnet wird.

In einer weiteren bevorzugten Ausgestaltung weist der Proxy-Server zusätzlich einen Cache-Server auf. Ein Cache-Server enthält zuvor von einem oder mehreren Anwendungsservern heruntergeladene Webseiten und möglicherweise FTP (File Transfer Protokoll)-Files und/oder andere Files, die ein Nutzer bzw. ein Endgerät möglicherweise herunterladen möchte. Für den Fall, dass die für das Endgerät bestimmten Daten bereits im Cache-Server enthalten sind, werden diese dann unmittelbar vom Proxy-Server an das Endgerät gesandt, wobei sie wiederum an den (ggf. ebenfalls in den Proxy-Server integrierten) Transmissions-Server geleitet und von diesem dann in zwei Datenströme aufgeteilt werden.

Es wird darauf hingewiesen, dass bei dieser Ausführungsvariante ein Verbindungsaufbau zwischen dem Endgerät und einem Anwendungs-Server nicht erfolgt. Es wird lediglich eine L7-Verbindung zwischen dem Endgerät und dem Proxy-Server bzw. dem Cache-Server aufgebaut. Trotzdem besteht jedoch eine L7-Assoziation zwischen dem Endgerät und dem Anwendungs-Server, da insgesamt die Daten vom Anwendungs-Server an das Endgerät übertragen werden. Der erste Teil der Datenübertragung erfolgte lediglich in einem vorgelagerten Schritt. Trotzdem besteht eine logische L7-Assoziation zwischen dem Endgerät und dem Anwendungs-Server.

In einer anderen Betrachtungsweise stellt der Cache-Server einen Anwendungs-Server im Sinne der vorliegenden Erfindung dar. Bei dieser Betrachtungsweise besteht dann eine L7-Verbindung zwischen dem Cache-Server als Anwendungs-Server und dem Endgerät.

In einer weiteren bevorzugten Ausgestaltung erfolgt ein Kommunikationsvorgang zwischen einem Anwendungs-Server und dem Endgerät stets unter Zwischenschaltung eines Tunnel-Servers.

Dabei überträgt das Endgerät im Rahmen eines an sich bekannten Tunnel-Protokolls eine zweite Endadresse des Endgeräts an einen Tunnel-Server. Der Tunnel-Server kommuniziert unter dieser zweiten Adresse des Endgeräts mit dem Anwendungs-Server, wobei für das Endgerät bestimmte Daten vom Anwendungs-Server zunächst an den Tunnel-Server und vom Tunnel-Server dann weiter an den Transmissions-Server geleitet werden. Die Daten des über ein Breitbandnetz an das Endgerät übertragenen Datenstroms enthalten dabei in der Regel die zweite, getunnelte Adresse des Endgeräts als Empfängeradresse. Der Tunnel-Server wird auch als VPN (Virtual Private Network)-Server bezeichnet. Entsprechende Tunnel-Techniken sind dem Fachmann bekannt, so dass hierauf nicht weiter eingegangen wird.

In einer weiteren Erfindungsvariante erfolgt ein Kommunikations-Vorgang zwischen einem Anwendungs-Server und einem Endgerät, ohne dass die Daten über einen bestimmten Server geleitet würden. Insbesondere werden Daten vom Endgerät an den Anwendungs-Server über ein schmalbandiges Netz, insbesondere das Internet und/oder POTS/ISDN-Leitungen gesandt, d.h. es liegt ein üblicher "Surfvorgang" vor. Die vom Anwendungs-Server an das Endgerät zu übertragenden Daten werden vom Anwendungs-Server zunächst an einen Transmissions-Server übertragen, der die Datenströme dann aufteilt. Die Daten werden vom Anwendungs-Server beispielsweise über Backbone-Leitungen oder in beliebiger anderer Weise breitbandig an den Transmissionsserver übertragen, ohne dass die Daten über einen bestimmten Proxy-Server oder Tunnel-Server geleitet würden.

In einer bevorzugten Ausgestaltung der Erfindung ist vorgesehen, dass auch Daten, die zwecks des Aufbaus einer Verbindung oder einer Assoziation zwischen dem Anwendungsserver und dem Endgerät und/oder zwischen dem Transmissionsserver und dem Endgerät übertragen werden, durch den Transmissions-Server in zwei Datenströme aufgeteilt und gleichzeitig über das schmalbandige Netz und das Breitbandnetz übertragen werden. Der gleichzeitige Einsatz zweier Netze bzw. Rückkanäle erfolgt bevorzugt somit auch hinsichtlich solcher Daten, die zwecks eines Verbindungsaufbaus zum Endgerät übertragen werden.

Es ist vorgesehen, dass der Transmissions-Server und das Endgerät an mindestens ein schmalbandiges Netz und an mindestens ein Breitbandnetz angeschlossen sind. Die gleichzeitige Datenübertragung mittels mindestens zweier Datenströme erfolgt über zwei getrennte Netze, bevorzugt bis zum Endgerät. Bevorzugt stehen der Transmissions-Server und/oder das Endgerät jedoch außerhalb der entsprechenden Netze, d.h. sie gehören nicht zur Netzstruktur. Die Anordnung von Transmissions-Server und/oder Endgerät außerhalb der entsprechenden Netze weist den Vorteil auf, dass ohne Modifikation der Netzstruktur das gewünschte Verfahren und die gewünschte Funktionalität bereitgestellt werden können.

Die mindestens zwei vom Transmissions-Server ausgehenden Datenströme werden bevorzugt im Endgerät oder einem Server des Endgeräts mit breitbandigem Anschluss zusammengeführt. Die zusammengeführten Datenströme können im Endgerät dann dargestellt, bearbeitet oder weitergeleitet werden.

In der Regel ist das Volumen der von Anwendungsserver zum Endgerät zu übertragenden Daten wesentlich größer als das Volumen der vom Endgerät zum Anwendungsserver zu übertragenden Daten. Die Erfindung ist jedoch unabhängig von dem genauen Volumen der an das Endgerät zu übertragenden Daten einsetzbar.

In einer Ausführungsvariante der Erfindung ist die Nutzungsintensität des schmalbandigen und breitbandigen Rückkanals durch die beiden vom Transmissions-Server ausgehenden Datenströme für die gesamte Dauer der Datenübertragung statisch vorgegeben. Dabei ist denkbar, dass die maximale Bandbreite des jeweiligen Rückkanals fest vorgegeben ist, insbesondere bei dem Breitbandrückkanal. Auch wenn die aktuellen Datenströme die Bandbreite nicht ausfüllen, liegt bei dieser Variante eine feste Aufteilung der Datenströme vor.

In einer alternativen Ausgestaltung ist die Nutzungsintensität des schmalbandigen und breitbandigen Rückkanals durch die beiden vom Transmissions-Server ausgehenden Datenströme dynamisch adaptierbar. Dabei kann vorgesehen sein, dass ein Netzwerkmanagement oder ein Benutzer die Nutzungsintensität der vom Transmissions-Server ausgehenden Datenströme dynamisch festlegt. Bevorzugt ist dabei vorgesehen, dass das Netzwerkmanagement als Steuerungssoftware ausgebildet ist, die in den Transmissionsserver integriert ist und die die Nutzung der beiden Rückkanal-Verbindungen durch die beiden ausgehenden Datenströme festlegt, insbesondere anhand zu erwartender Übertragungszeiten zum Endgerät und/oder anhand anderer aktueller Kriterien wie die Kosten der Datenübertragung.

Der schmalbandig übertragene Datenstrom wird bevorzugt über ein Paketvermittlungsnetz und POTS/ISDN-Leitungen an das Endgerät übertragen. Dabei werden die Daten vom Transmissions-Server über das Paketvermittlungsnetz zu einem Einwählknoten des Endgeräts in das Paketvermittlungsnetz und vom Einwählknoten an das Endgerät übertragen werden. Der Transmissions-Server ist bevorzugt kein Einwählknoten in das Paketvermittlungsnetz.

Unter einer schmalbandigen Übertragung im Sinne der vorliegenden Erfindung wird auch eine Datenübertragung unter Verwendung der xDSL-Technik verstanden. Unter dem Akronym "DSL" (digital subscriber line) werden Technologien zur schnellen Übertragung digitaler Daten zusammengefasst, die einen schnellen Zugang eines Endgeräts bevorzugt an das Internet ermöglichen.

Die gebräuchlichste Form von xDSL-Technik ist die aDSL-Technik (asymmetric digital subscriber line) auf dem physikalischem Medium "kupferne Telefon-Doppelader": Sie ist asymmetrisch in dem Sinne, dass sie für diese Datenübertragung einen schnellen Empfangs- und einen langsameren Sendekanal vorsieht. Eine andere gebräuchliche Form Telefondrahtgebundener xDSL-Technik ist die sDSL-Technik (symmetric digital subscriber line): Hier liegt eine symmetrische, gleichermaßen schnelle Auslegung von Empfangs- und Sendekanal vor. Mit Telefondraht-xDSL-Techniken sind vorzugsweise Übertragungsraten im Megabit/s-Bereich möglich. Z.B. liegt die an einem aDSL-Anschluss für den Datenempfang des Endgeräts vorgesehene Bandbreite in der Regel bei rund 0,8 Mbit/s bis 3 Mbit/s.

Es ist somit in einer weiteren bevorzugten Ausgestaltung der Erfindung vorgesehen, dass der schmalbandig übertragene Datenstrom über ein Paketvermittlungsnetz und eine xDSL-Verbindung an das Endgerät übertragen wird. Hierbei werden die Daten vom Transmissions-Server über das Paketvermittlungsnetz zu einem xDSL-Anschlussknoten des Endgeräts an das Paketvermittlungsnetz und anschließend vom xDSL-Anschlussknoten mittels xDSL-Datenübertragungs-Technik an das Endgerät übertragen. Der Transmissions-Server ist dabei bevorzugt nicht in einem xDSL-Anschlussknoten angeordnet.

Das Akronym "xDSL" (DSL = digital subscriber line = digitale Teilnehmeranschlussleitung) im Sinne der vorliegenden Erfindung bezeichnet dabei alle Übertragungstechniken für digitale Daten - sowohl über Telefonleitungen aus Zweidraht-Kupferkabeln als auch über andere physikalische Medien (etwa TV-Kabel, DVB-T-Strecken oder weitere terrestrische oder satellitengestützte Funkstrecken) - zur Datenübertragung zwischen dem Computer eines Benutzers eines Paketvermittlungsnetzes und diesem Paketvermittlungsnetz (bevorzugt das Internet), mit Ausnahme der ISDN-Technik und der marktüblichen A-nalogmodem-Technik (etwa gemäß der V-Serie von ITU-Empfehlungen) für Telefonleitungen aus Zweidraht-Kupferkabeln.

Weitere Varianten so zu verstehender xDSL-Technik sind etwa:
- unidirektionale digitale Datenübertragungstechniken vom Benutzer-Computer zum Paketvermittlungsnetz (genauer: zu einem seiner Server) auf jedwedem physikalischen Medium,
- nicht offensichtliche Varianten der standardisierten xDSL-Techniken auf kupfernen Telefondraht-Doppeladern wie etwa der "inverse" Einsatz von aDSL-Technik (mit schnellem Sende- und langsameren Empfangskanal) auf der Strecke zwischen Benutzer-Computer und Server, sowie
- alle Arten von xDSL-Techniken auf anderen physikalischen Medien als kupfernen Telefondraht-Doppeladern auf einer solchen Strecke.

Bevorzugt wird das Breitband-Netz bzw. ein BreitbandRückkanal des Breitband-Netzes durch eine Satelliten-Übertragungsstrecke realisiert. Dabei werden die Rückkanal-Daten vom Transmissions-Server breitbandig zu einem Satelliten-Uplink übertragen, vom Satelliten-Uplink zu einem Satelliten-Transponder gesandt, vom Transponder ausgestrahlt, mittels einer terrestrischen Antenne des Benutzers empfangen und zum Endgerät übertragen. Die Daten können dabei beispielsweise mittels einer dem Endgerät oder dem LAN (dem es angehört) direkt zugeordneten Satellitenschüssel empfangen werden.

Ebenfalls ist es möglich, die vom Transponder ausgestrahlten Daten bzw. Datenpakete mittels einer TV-Kabel-Kopfstation eines TV-Kabelnetzbetreibers zu empfangen und in das entsprechende Kabelnetz einzugeben. Die Datenpakete werden dann über das TV-Kabel vom Endgerät empfangen.

Auch können die vom Transponder ausgestrahlten BreitbandRückkanal-Daten an die Empfangsantenne eines DVB-T-Diensterbringers geleitet werden. Die Datenpakete werden dann entsprechend dem DVB-T-Kanal am Endgerät empfangen.

Schließlich können die vom Transponder ausgestrahlten Breitband-Rückkanal-Daten auch an die Empfangsantenne eines WLAN- und/oder Funknetz- und/oder Stromnetz-Diensterbringers geleitet werden. Die Datenpakete werden dann entsprechend den jeweiligen Protokollen am Endgerät empfangen.

Für sämtliche Fälle gilt, dass die Datenpakete bevorzugt anhand ihrer Adressfelder als für das Endgerät bestimmt identifiziert werden. Beispielsweise enthalten die übersandten Daten die IP-Adresse des Endgerätes in der betrachteten Verbindung oder die MAC-Adresse des Endgerätes.

Alternativ zur Satelliten-Datenübertragungsstrecke beinhaltet der Verband der Datenübertragungsabschnitte des Rückkanal-Übertragungswegs des über ein Breitbandnetz übertragenen Datenstroms in Gänze oder teilweise beispielsweise ein dezidiertes (Glasfaser-)Kabel, den Kanals eines Fernsehkabels eines Fernsehkabel-Netzes, einen Kanal eines DVB-T-Systems, ein Stromkabel eines Stromnetzes, eine breitbandige Funkstrecke (insbesondere etwa entsprechend den WLAN-Standards realisiert). Hierzu wird für die Verbindung zwischen dem Switch und dem Endteilnehmer auf geeignete dedizierte (Glasfaser-)Kabeltechnik, Fernsehkabel-Techniken, Stromnetz-Techniken und Funk-Techniken zur Datenübertragung zurückgegriffen, die dem Fachmann an sich bekannt sind.

Insbesondere wird in einer vorteilhaften Ausgestaltung mindestens ein Datenübertragungsabschnitt des Rückkanal-Übertragungswegs des über ein Breitbandnetz übertragenen Datenstroms durch eine TV-Kabel-Übertragungsstrecke realisiert.

In einer weiteren bevorzugten Ausgestaltung beinhaltet der Verband der Datenübertragungsabschnitte des Rückkanal-Übertragungswegs des über ein Breitbandnetz übertragenen Datenstroms bis zum Endgerät eine TV-Kabel-Übertragungsstrecke und eine WLAN-Übertragungsstrecke oder eine Satelliten-Übertragungsstrecke und eine WLAN-Übertragungsstrecke. Ebenfalls kann bevorzugt eine Satelliten-Übertragungsstrecke, eine TV-Kabel-Übertragungsstrecke und eine WLAN-Übertragungsstrecke vorgesehen sein.

Der erfindungsgemäße Transmissions-Server weist eine Einrichtung auf, die sämtliche ankommenden und/oder in dem Transmissions-Server erzeugten Daten einer betrachteten Applikation bzw. L7-Verbindung oder L7-Assoziation in zwei Datenströme aufteilt, wobei die Daten des einen Datenstroms an einen mit einer schmalbandigen TK-Infrastruktur verbundenen Ausgang und die Daten des anderen Datenstroms an einen mit einer breitbandigen TK-Infrastruktur verbundenen Ausgang geleitet werden.

### Beschreibung mehrerer Ausführungsbeispiele

Die Erfindung wird nachfolgend unter Bezugnahme auf die Figuren der Zeichnungen anhand eines Ausführungsbeispiels näher erläutert. Es zeigen:
- Figur 1 -: schematisch ein erstes erfindungsgemäßes Telekommunikationsnetz und
- Figur 2 -: schematisch eine Darstellung der Funktionseinheiten eines erfindungsgemäßen Transmissions-Servers.

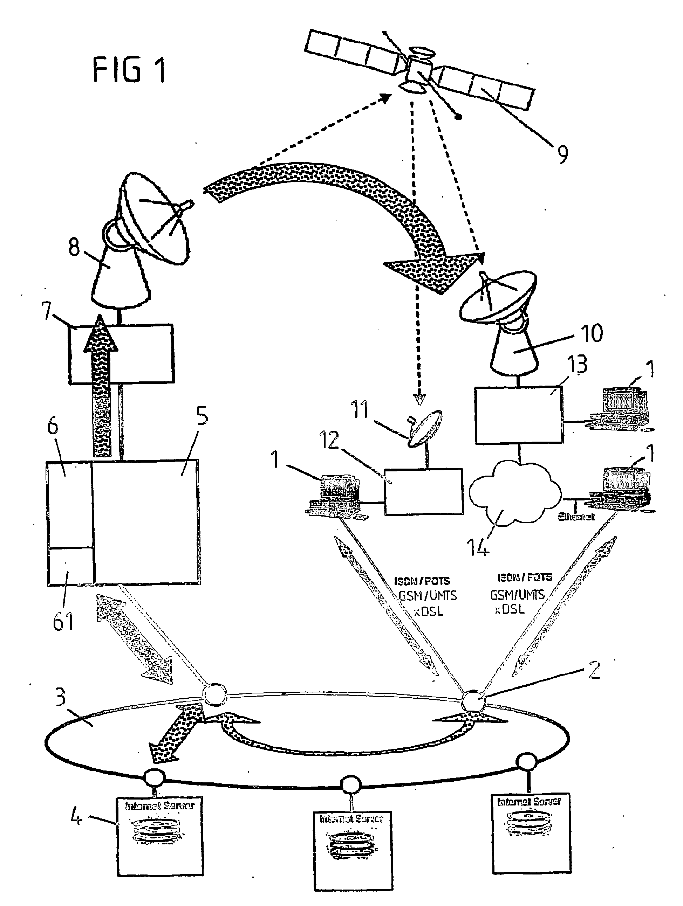

Die Figur 1 zeigt ein Ausführungsbeispiel einer Telekommunikationsanordnung, bei der eine Vielzahl von Endgeräten 1 über eine in der Regel schmalbandige ISDN/POTS/GSM/UMTS/xDSL-Verbindung oder in anderer Weise über einen Einwählpunkt 2 an ein Paketvermittlungsnetz 3, insbesondere das Internet angeschlossen sind.

Jedes Endgerät 1 ist neben der Verbindung zum Internet 3 des weiteren jeweils mit einer Kommunikationsstruktur verbunden, die von einem Satelliten 9 ausgestrahlte Daten empfängt und breitbandig an das Endgerät 1 weiterleitet. In einem Ausführungsbeispiel empfängt das Endgerät 1 die von einem Satelliten 9 ausgestrahlten Daten über eine dem Endgerät unmittelbar zugeordnete Satellitenantenne 11, die über ein Breitband-Empfangssystem 12, beispielsweise eine PC-Karte oder eine externe Box an das Endgerät 1 angeschlossen ist. Die Satellitenantenne 11 kann dabei auch die Empfangsstation einer Satelliten-Gemeinschaftsantennenanlage sein.

In einem anderen Beispiel ist das Endgerät 1 an ein Fernseh-Kabelnetz 13 angeschlossen, in das breitbandig Daten eingespeist werden, die von einer Kabelstation 10 empfangen werden. Des weiteren ist es denkbar, dass das Endgerät 1 an ein lokales Netzwerk LAN 14 angeschlossen ist, das über das Kabelnetz oder auch direkt an eine Satellitenempfangsantenne 10 angeschlossen ist.

Mit dem Internet 3 verbunden sind eine Vielzahl von Anwendungs-Severn 4, von denen der Nutzer von ihm ausgewählte Daten herunterladen kann. Grundsätzlich können die Daten über die schmalbandige ISDN/POTS/GSM/UMTS/xDSL-Verbindung an das Endgerät 1 übertragen werden. Es ist jedoch bevorzugt vorgesehen, dass die zu übertragenden Daten von dem jeweiligen Anwendungs-Server 4 breitbandig an das Endgerät 1 übertragen werden.

Eine Verbindung zwischen dem Endgerät 1 und einem Anwendungs-Server 4 erfolgt im dargestellten Ausführungsbeispiel stets unter Zwischenschaltung eines Proxy-Servers 6. Daten werden vom Endgerät 1 zum Anwendungs-Server 4 und vom Anwendungs-Server 4 zum Endgerät 1 somit stets unter Zwischenschaltung des Proxy-Servers 6 übertragen. In den Proxy-Server 6 integriert ist ein Cache-Server 61. Sofern der Cache-Server 61 die gewünschten Daten wie Webseiten und Datenfiles bereits enthält, so erfolgt lediglich eine Verbindung zwischen dem Endgerät 1 und dem Proxy-Server 6 bzw. Cache-Server 61. Sofern die gewünschte Information nicht im Chache-Server 61 enthalten ist, handelt der Proxy-Server 6 in Vertretung des Endgeräts 1 und fordert die gewünschte Information unter einer eigenen IP-Adresse von dem Anwendungs-Server 4 an. Die Daten werden dann vom Anwendungs-Server 4 an den Proxy-Server 6 übertragen und dort der ursprünglichen Anfrage des Endgeräts 1 zugeordnet.

Der Proxy-Server 6 ist mit einem Transmissions-Server 5 verbunden, der die Daten in zwei Datenströme aufsplittet und weiterleitet. Bevorzugt ist die Funktionalität des Transmissions-Servers 5 in den Proxy-Server mit integriert, so dass ein Gerät vorliegt. Grundsätzlich kann der Transmissions-Server 5 jedoch auch eine gesonderte Einheit darstellen.

Die an ein Endgerät 1 zu übertragenden Daten einer betrachteten Anwendung (beispielsweise http (hypertext transport protocol), ftp (file transfer protocol) oder die eine proprietäre "streaming application") werden vom Proxy-Server 6 an den Transmissions-Server 5 geleitet und von diesem weiter verteilt. Es ist nun vorgesehen, dass sämtliche an ein Endgerät 1 zu übertragenden Daten vom Transmissions-Server 5 stets sowohl über das Paketvermittlungsnetz 3 als auch über das Breitband-Netz bzw. die Satellitenübertragungsstrecke übertragen werden. Hierzu nimmt der Transmissions-Server 2 eine Aufteilung des Datenstroms vor. Wesentlich ist dabei, dass sämtliche Daten, die zum Endgerät 1 zu übertragen sind, stets und vom ersten Moment einer Datenübertragung an in zwei Datenströme aufgesplittet werden. Es erfolgt kein Zuschalten oder Wegschalten des einen Übertragungsweges, sondern beide Datenströme sind gleichzeitig vorhanden, sobald beim Transmissions-Server Daten vorliegen, die an das Endgerät 1 zu übertragen sind.

Sofern die Daten über Satellit übertragen werden, werden sie dabei vom Transmissions-Server 5 an einen Satelliten-Uplink 7 geleitet, vom Satelliten-Uplink 7 über eine Satellitenantenne 8 an den Satelliten 9 gesandt, von einem Transponder des Satelliten 9 mit einer bestimmten Frequenz und Polarisation ausgestrahlt und über die dem jeweiligen Endgerät 1 zugeordnete Satellitenantenne 10, 11 breitbandig empfangen. Eine Datenübertragung über eine solche Satellitenstrecke ist in der DE 198 60 756 A1 ausführlich beschrieben, auf die insofern ausdrücklich Bezug genommen wird.

Es wird darauf hingewiesen, dass es sich bei den vom Transmissions-Server 5 in zwei Datenströme aufgeteilten Daten durchaus auch um Daten handeln kann, die beispielsweise im Rahmen eines bestimmten Verschlüsselungs- oder Kompressionsverfahrens beim Transmissions-Server 5 erste erzeugt und an das Endgerät 1 übersandt werden.

Bevorzugt erfolgt bereits bei der Herstellung einer Verbindung bzw. Assoziation zwischen einem Endgerät 1 und einem Anwendungs-Server 4 eine Übertragung der diesbezüglichen Verbindungsaufbaudaten zum Endgerät 1 gleichzeitig über die beiden Übertragungswege bzw.

Kommunikationsnetze, die vom Transmissions-Server 5 ausgehen.

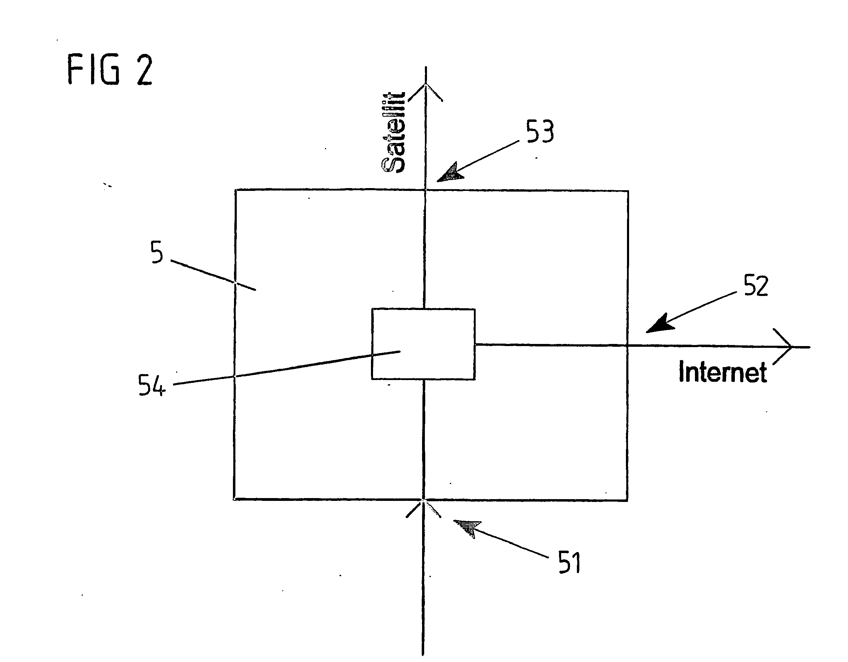

Die Figur 2 zeigt einen erfindungsgemäßen Transmissions-Server 5. Der Transmissions-Server 5 weist einen Eingang 51, einen ersten Ausgang 52 zu einem Paketvermittlungsnetz wie dem Internet und einen zweiten Ausgang 53 zu einem Breitbandnetz, etwa einem Satellitennetz auf. Des Weiteren ist eine Einrichtung 54 vorhanden, die automatisch und ohne das vorliegen gesonderter Steuerbefehle sämtliche über den Eingang 51 ankommenden und ggf. auch zusätzliche oder veränderte, in dem Transmissions-Server 5 erzeugte Daten in zwei Datenströme aufteilt. Die Aufteilung erfolgt schon bei dem ersten Beginn einer Datenübertragung zu einem Endsystem im Rahmen einer L7-Verbindung oder L7-Assoziation. Sobald zu übertragende Daten vorliegen, werden sie in zwei Datenströme aufgeteilt.

Die Aufteilung in zwei Datenströme kann zum einen derart erfolgen, dass die Nutzungsintensität bzw. der Datendurchsatz der jeweiligen Datenströme statisch vorgegeben ist. Für diesen Fall wird ein bestimmter Prozentsatz der eingehenden Daten über die Satellitenstrecke und ein anderer Prozentsatz der eingehenden Daten gleichzeitig über das Internet übertragen.

Es kann jedoch ebenfalls vorgesehen sein, dass der Datendurchsatz der jeweiligen Datenströme dynamisch festlegbar ist. Hierzu kann in die Einrichtung 54 eine Steuerungs-Software integriert sein. Diese Steuerungs-Software kann den Datendurchsatz für die jeweiligen Rückkanal-Verbindungen über die Satellitenstrecke und das Paketvermittlungsnetz festlegen. Die Festlegung erfolgt beispielsweise anhand zu erwartender Übertragungszeiten zum Endgerät oder unter Berücksichtigung der Kosten der Datenübertragung.

Es wird jedoch darauf hingewiesen, dass auch in dem Fall einer dynamischen Festlegbarkeit des Durchsatzes auf den einzelnen Datenströmen stets zwei gleichzeitige Datenströme vorliegen, über die von der ersten Datenübertragung an sämtliche Daten zum Endsystem übertragen werden.

## Patentansprüche

1. Verfahren zur Übertragung von Daten auf unterschiedlichen Übertragungswegen in einem Kommunikations-Vorgang zwischen einem Anwendungs-Server und einem Endgerät, wobei diese Übertragung zum Endgerät zumindest auf je einer der involvierten Teilstrecken gleichzeitig sowohl schmalbandig über mindestens ein schmalbandiges Netz als auch breitbandig über mindestens ein Breitbandnetz erfolgt, mit folgenden Schritten:
a) Übertragen von für das Endgerät (1) bestimmten Daten (Rückkanal-Daten) von dem Anwendungs-Server (4) an einen Transmissions-Server (5);
b) im Transmissions-Server (5) Aufteilen aller vom Anwendungs-Server erhaltenen, an das Endgerät (1) zu übertragenden Daten in mindestens zwei Datenströme, wobei die Aufteilung in zwei Datenströme mit dem ersten Vorliegen von an das Endgerät (1) zu übertragenden Daten beim Transmissions-Server (5) erfolgt;
c) Übertragen mindestens eines Datenstroms vom Transmissions-Server (5) an das Endgerät (1) zumindest auf einer Teilstrecke eines dabei benutzten Übertragungswegs über mindestens ein schmalbandiges Netz (3); und
d) gleichzeitig dazu Übertragen des mindestens einen weiteren Datenstroms vom Transmissions-Server (5) an das Endgerät auf allen Datenübertragungsabschnitten eines dabei benutzten Übertragungswegs über mindestens ein Breitbandnetz (8).

2. Verfahren nach Anspruch 1, bei dem ein Kommunikations-Vorgang zwischen einem Anwendungs-Server (4) und einem Endgerät (1) unter Zwischenschaltung eines Proxy-Servers (6) erfolgt, so dass Daten vom Endgerät zum Anwendungs-Server (4) und vom Anwendungs-Server (4) zum Endgerät unter Zwischenschaltung des Proxy-Servers (6) übertragen werden, wobei für das Endgerät (1) bestimmte Daten vom Anwendungs-Server (4) zunächst an den Proxy-Server (6) und vom Proxy-Server (6) weiter an den Transmissions-Server (5) geleitet werden, der dann die Aufteilung in mindestens zwei Datenströme vornimmt.

3. Verfahren nach Anspruch 2, bei dem der Transmissions-Server (5) bzw. dessen Funktionalität in den Proxy-Server (6) integriert ist.

4. Verfahren nach Anspruch 2 oder 3, bei dem der Proxy-Server (6) zusätzlich einen Cache-Server (61) enthält und für den Fall, dass die für das Endgerät (1) bestimmten Daten bereits im Cache-Server (61) enthalten sind, diese unmittelbar vom Proxy-Server (6) an das Endgerät gesandt werden, wobei die Daten an den Transmissions-Server (5) geleitet und von diesem in zwei Datenströme aufgeteilt werden.

5. Verfahren nach Anspruch 1, bei dem ein Kommunikations-Vorgang zwischen einem Anwendungs-Server (4) und einem Endgerät (1) unter Zwischenschaltung eines Tunnel-Servers erfolgt, wobei das Endgerät im Rahmen eines Tunnel-Protokolls eine zweite Adresse an den Tunnel-Server überträgt und der Tunnel-Server unter dieser zweiten Adresse des Endgeräts (1) mit dem Anwendungs-Server (4) kommuniziert, und wobei für das Endgerät (1) bestimmte Daten vom Anwendungs-Server (4) zunächst an den Tunnel-Server und vom Tunnel-Server weiter an den Transmissions-Server (5) geleitet werden, der dann die Aufteilung in mindestens zwei Datenströme vornimmt.

6. Verfahren nach Anspruch 5, bei dem der Transmissions-Server (5) bzw. dessen Funktionalität in den Tunnel-Server integriert ist.

7. Verfahren nach Anspruch 1, bei dem in einem Kommunikations-Vorgang zwischen einem Anwendungs-Server (4) und einem Endgerät (1) hinsichtlich der vom Endgerät (1) an den Anwendungs-Server (4) zu übertragenden Daten eine Datenübertragung ohne Zwischenschaltung eines bestimmten Servers über mindestens ein schmalbandiges Netz, insbesondere das POTS/ISDN-Netz erfolgt, wobei für das Endgerät bestimmte Daten vom Anwendungs-Server (4) wiederum ohne Zwischenschaltung eines bestimmten Servers an den Transmissions-Server (5) geleitet werden.

8. Verfahren nach mindestens einem der vorangehenden Ansprüche, bei dem auch Daten, die zwecks des Aufbaus einer L7-Verbindung oder einer L7-Assoziation zwischen dem Anwendungsserver und dem Endgerät (1) und/oder zwischen dem Transmissions-Server und dem Endgerät (1) übertragen werden, durch den Transmissions-Server (5) in zwei Datenströme aufgeteilt und gleichzeitig über das schmalbandige Netz und das Breitbandnetz übertragen werden.

9. Verfahren nach mindestens einem der vorangehenden Ansprüche, bei dem der Transmissions-Server (5) an mindestens ein Paketvermittlungsnetz und an mindestens ein Breitbandnetz angeschlossen ist.

10. Verfahren nach Anspruch 9, bei dem der Transmissions-Server (5) und/oder das Endgerät (1) jedoch außerhalb der entsprechenden Netze angeordnet sind.

11. Verfahren nach mindestens einem der vorangehenden Ansprüche, bei dem das Endgerät (1) bidirektional mit mindestens einem schmalbandigen Netz und unidirektional zum Datenempfang mit mindestens einem Breitbandnetz verbunden ist.

12. Verfahren nach mindestens einem der vorangehenden Ansprüche, bei dem die mindestens zwei Datenströme im Endgerät (1) oder einem Server des Endgeräts mit breitbandigem Anschluss zusammengeführt werden.

13. Verfahren nach mindestens einem der vorangehenden Ansprüche, bei dem das Volumen der von Anwendungsserver (4) zum Endgerät (1) zu übertragenden Daten größer ist als das Volumen der vom Endgerät (1) zum Anwendungsserver (4) zu übertragenden Daten.

14. Verfahren nach mindestens einem der vorangehenden Ansprüche, bei dem sämtliche an dem Transmissions-Server (5) ankommende Daten über die mindestens zwei Datenströme an das Endgerät (1) übertragen werden.

15. Verfahren nach mindestens einem der vorangehenden Ansprüche, bei dem der Datendurchsatz durch den schmalbandigen und der Datendurchsatz durch den breitbandigen Rückkanal für die vom Transmissions-Server (5) ausgehenden Datenströme für die gesamte Dauer der Datenübertragung statisch vorgegeben ist.

16. Verfahren nach mindestens einem der Ansprüche 1 bis 15, bei dem der Datendurchsatz durch den schmalbandigen und der Datendurchsatz durch den breitbandigen Rückkanal für die vom Transmissions-Server (5) ausgehenden Datenströme dynamisch adaptierbar ist.

17. Verfahren nach Anspruch 16, bei dem ein Netzwerkmanagement oder ein Benutzer den Datendurchsatz durch den schmalbandigen und breitbandigen Rückkanal für die vom Transmissions-Server (5) ausgehenden Datenströme dynamisch festlegt.

18. Verfahren nach Anspruch 17, bei dem das Netzwerkmanagement als Steuerungssoftware ausgebildet ist, die in den Transmissions-Server (5) integriert ist und die die Nutzung der beiden Rückkanal-Verbindungen durch die beiden ausgehenden Datenströme festlegt, insbesondere anhand zu erwartender Übertragungszeiten zum Endgerät und/oder anhand anderer aktueller Kriterien wie die Kosten der Datenübertragung.

19. Verfahren nach mindestens einem der vorangehenden Ansprüche, bei dem der schmalbandig übertragene Datenstrom über ein Paketvermittlungsnetz und POTS/ISDN-Leitungen an das Endgerät übertragen wird.

20. Verfahren nach Anspruch 19, wobei die Daten vom Transmissions-Server über das Paketvermittlungsnetz zu einem Einwählknoten (31) des Endgeräts (1) in das Paketvermittlungsnetz und vom Einwählknoten (31) an das Endgerät (1) übertragen werden.

21. Verfahren nach Anspruch 20, wobei der Transmissions-Server (5) kein Einwählknoten in das Paketvermittlungsnetz ist.

22. Verfahren nach mindestens einem der Ansprüche 1 bis 19, bei dem der schmalbandig übertragene Datenstrom über ein Paketvermittlungsnetz und eine xDSL-Verbindung an das Endgerät übertragen wird.

23. Verfahren nach Anspruch 22, wobei die Daten vom Transmissions-Server (5) über das Paketvermittlungsnetz (3) zu einem xDSL-Anschlussknoten (2) des Endgeräts (1) an das Paketvermittlungsnetz (3), und anschließend vom xDSL-Anschlussknoten (2) mittels xDSL-Datenübertragungs-Technik an das Endgerät (1) übertragen werden,

24. Verfahren nach Anspruch 23, wobei der Transmissions-Server (5) nicht in einem xDSL-Anschlussknoten angeordnet ist.

25. Verfahren nach mindestens einem der vorangehenden Ansprüche, bei dem mindestens ein Datenübertragungsabschnitt des Rückkanal-Übertragungswegs des über ein Breitbandnetz übertragenen Datenstroms durch eine Satelliten-Übertragungsstrecke realisiert wird.

26. Verfahren nach Anspruch 25, wobei die über eine Satelliten-Übertragungsstrecke übertragenen Daten mittels einer dem Endgerät (1) oder mittels einer einem lokalen Netzwerk, dem das Endgerät (1) angehört, zugeordneten Sattelitenschüssel (11) empfangen werden.

27. Verfahren nach Anspruch 25, wobei die über eine Satelliten-Übertragungsstrecke übertragenen Daten mittels einer Kabelkopfstation (10) eines Kabelbetreibers empfangen, in das entsprechende Kabelnetz eingegeben und über Kabel vom Endgerät empfangen werden.

28. Verfahren nach Anspruch 25, wobei die über eine Satelliten-Übertragungsstrecke übertragenen Daten an die Empfangsantenne eines DVB-T-Diensterbringers geleitet und über einen DVB-T-Kanal am Endgerät (1) empfangen werden.

29. Verfahren nach Anspruch 25, wobei die über eine Satelliten-Übertragungsstrecke übertragenen Daten an die Empfangsantenne eines WLAN- und/oder Funknetz- und/oder Stromnetz-Diensterbringers geleitet und entsprechend den jeweiligen Protokollen am Endgerät empfangen werden.

30. Verfahren nach mindestens einem der vorangehenden Ansprüche, bei dem mindestens ein Datenübertragungsabschnitt des Rückkanal-Übertragungswegs des über ein Breitbandnetz übertragenen Datenstrom durch eine TV-Kabel-Übertragungsstrecke realisiert wird.

31. Verfahren nach mindestens einem der vorangehenden Ansprüche, bei dem der Verband der Datenübertragungsabschnitte des Rückkanal-Übertragungswegs des über ein Breitbandnetz übertragenen Datenstroms bis zum Endgerät (1) eine TV-Kabel-Übertragungsstrecke und eine WLAN-Übertragungsstrecke beinhaltet.

32. Verfahren nach mindestens einem der vorangehenden Ansprüche, bei dem der Verband der Datenübertragungsabschnitte des Rückkanal-Übertragungswegs des über ein Breitbandnetz übertragenen Datenstroms bis zum Endgerät (1) eine Satelliten-Übertragungsstrecke und eine WLAN-Übertragungsstrecke beinhaltet.

33. Verfahren nach mindestens einem der vorangehenden Ansprüche, bei dem der Verband der Datenübertragungsabschnitte des Rückkanal-Übertragungswegs des über ein Breitbandnetz übertragenen Datenstroms bis zum Endgerät (1) eine Satelliten-Übertragungsstrecke, eine TV-Kabel-Übertragungsstrecke und eine WLAN-Übertragungsstrecke beinhaltet.

34. Verfahren nach mindestens einem der vorangehenden Ansprüche, bei dem der Anwendungs-Server (4) mit einem Paketvermittlungsnetz (3) verbunden ist.

35. Verfahren nach mindestens einem der vorangehenden Ansprüche, bei dem die übertragenen Daten einer bestimmten Anwendung angehören, die zwischen dem Anwendungs-Server (4) und dem Endgerät (1) ausgeführt wird.

36. Verfahren nach mindestens einem der vorangehenden Ansprüche, bei dem zwischen dem Anwendungs-Server (4) und dem Endgerät (1) eine L7-Verbindung oder L7-Assoziation vorliegt und die Datenübertragung im Rahmen dieser L7-Verbindung oder L7-Assoziation erfolgt.

37. Telekommunikationsanordnung zur Übertragung von Daten auf unterschiedlichen Übertragungswegen in einem Kommunikations-Vorgang zwischen einem Anwendungs-Server (4) und einem Endgerät, wobei diese Übertragung zum Endgerät zumindest auf je einer der involvierten Teilstrecken gleichzeitig sowohl schmalbandig über mindestens ein schmalbandiges Netz als auch breitbandig über mindestens ein Breitbandnetz erfolgt, mit:
a) Mitteln zum Übertragen von für das Endgerät (1) bestimmten Daten (Rückkanal-Daten) von dem Anwendungs-Server (4) an einen Transmissions-Server (5);
b) im Transmissions-Server (5) angeordneten Mitteln zum Aufteilen aller vom Anwendungsserver erhaltenen, an das Endgerät (1) zu übertragenden Daten in mindestens zwei Datenströme, wobei die Aufteilung in zwei Datenströme mit dem ersten Vorliegen von an das Endgerät (1) zu übertragenden Daten beim Transmissions-Server (5) erfolgt;
c) Mitteln zum Übertragen mindestens eines Datenstroms vom Transmissions-Server (5) an das Endgerät (1) zumindest auf einer Teilstrecke eines dabei benutzten Übertragungswegs über mindestens ein schmalbandiges Netz (3); und
d) Mitteln zum gleichzeitigen Übertragen des mindestens einen weiteren Datenstroms vom Transmissions-Server (5) an das Endgerät (1) auf allen Datenübertragungsabschnitten eines dabei benutzten Übertragungswegs über mindestens ein Breitbandnetz (8).

38. Transmissions-Server zur Durchführung des Verfahrens nach Anspruch 1 mit einer Einrichtung (54), die sämtliche ankommenden und/oder in dem Transmissions-Server (5) erzeugten Daten in zwei Datenströme aufteilt, wobei die Daten des einen Datenstroms an einen mit einer schmalbandigen TK-Infrastruktur oder an einen mit einem Paketvermittlungsnetz verbundenen Ausgang (52) und die Daten des anderen Datenstroms an einen mit einer breitbandigen TK-Infrastruktur verbundenen Ausgang (53) geleitet werden.

39. Transmissions-Server nach Anspruch 38, bei dem die Bandbreite der beiden Datenströme für die gesamte Dauer einer Datenübertragung statisch vorgegeben ist.

40. Transmissions-Server nach Anspruch 38, bei dem die Bandbreite der beiden Datenströme dynamisch adaptierbar ist.

41. Transmissions-Server nach Anspruch 39 oder 40, der eine Steuerungssoftware aufweist, die die Aufteilung der zu übertragenden Daten auf die beiden ausgehenden Datenströme festlegt.

## Claims

1. Method for transmitting data on different transmission paths in a communication transaction between an application server and a terminal, wherein this transmission to the terminal, in each case on at least one of the route sections involved, simultaneously takes place both using narrowband via at least one narrowband network and using broadband via at least one broadband network, having the following steps:
a) transmitting data (return-channel data), which are intended for the terminal (1), from the application server (4) to a transmissions server (5);
b) within the transmissions server (5), dividing all data which are received from the application server and must be transmitted to the terminal (1) into at least two data streams, wherein the division into two data streams takes place as soon as data which must be transmitted to the terminal (1) are present at the transmissions server (5);
c) transmitting at least one data stream from the transmissions server (5) to the terminal (1) on at least one route section of a currently used transmission path via at least one narrowband network (3); and
d) simultaneously transmitting the at least one further data stream from the transmissions server (5) to the terminal (1) on all data transmission sections of a currently used transmission path via at least one broadband network (8).

2. Method according to Claim 1, in which a communication transaction between an application server (4) and a terminal (1) takes place with intermediate switching of a proxy server (6), such that data from the terminal to the application server (4) and from the application server (4) to the terminal are transmitted with intermediate switching of the proxy server (6), wherein data which are intended for the terminal (1) are initially routed from the application server (4) to the proxy server (6) and from the proxy server (6) onward to the transmissions server (5) which then performs the division into at least two data streams.

3. Method according to Claim 2, in which the transmissions server (5) or its functionality is integrated into the proxy server (6).

4. Method according to Claim 2 or 3, in which the proxy server (6) additionally contains a cache server (61) and, in the event that the data which are intended for the terminal (1) are already contained in the cache server (61), these data are sent directly from the proxy server (6) to the terminal, wherein the data are routed to the transmissions server (5) and divided by said transmissions server (5) into two data streams.

5. Method according to Claim 1, in which a communication transaction between an application server (4) and a terminal (1) takes place with intermediate switching of a tunnel server, wherein the terminal transmits a second address to the tunnel server within the context of a tunnel protocol and the tunnel server communicates with the application server (4) under this second address of the terminal (1), and wherein data which are intended for the terminal (1) are initially routed from the application server (4) to the tunnel server and from the tunnel server onward to the transmissions server (5), which then performs the division into at least two data streams.

6. Method according to Claim 5, in which the transmissions server (5) or its functionality is integrated into the tunnel server.

7. Method according to Claim 1, in which in a communication transaction between an application server (4) and a terminal (1) in respect of the data which must be transmitted from the terminal (1) to the application server (4), a data transmission takes place via at least one narrowband network, in particular the POTS/ISDN network, without intermediate switching of a specified server, wherein data intended for the terminal are again routed from the application server (4) to the transmissions server (5) without intermediate switching of a specified server.

8. Method according to at least one of the preceding claims, in which data that are transmitted for the purpose of setting up an L7 connection or an L7 association between the application server and the terminal (1) and/or between the transmissions server and the terminal (1) are additionally divided into two data streams by the transmissions server (5) and transmitted simultaneously via the narrowband network and the broadband network.

9. Method according to at least one of the preceding claims, in which the transmissions server (5) is connected to at least one packet switching network and at least one broadband network.

10. Method according to Claim 9, in which the transmissions server (5) and/or the terminal (1) are nonetheless arranged outside of the corresponding networks.

11. Method according to at least one of the preceding claims, in which the terminal (1) is connected bidirectionally to at least one narrowband network and unidirectionally for receiving data to at least one broadband network.

12. Method according to at least one of the preceding claims, in which the at least two data streams are combined in the terminal (1) or in a server of the terminal having a broadband interface.

13. Method according to at least one of the preceding claims, in which the volume of data that must be transmitted from the application server (4) to the terminal (1) is greater than the volume of data that must be transmitted from the terminal (1) to the application server (4).

14. Method according to at least one of the preceding claims, in which all data arriving at the transmissions server (5) are transmitted via the at least two data streams to the terminal (1).

15. Method according to at least one of the preceding claims, in which the data throughput through the narrowband return channel and the data throughput through the broadband return channel for the data streams leaving the transmissions server (5) are statically predetermined for the entire duration of the data transmission.

16. Method according to at least one of the Claims 1 to 15, in which the data throughput through the narrowband return channel and the data throughput through the broadband return channel for the data streams leaving the transmissions server (5) are dynamically adaptable.

17. Method according to Claim 16, in which a network management entity or a user dynamically determines the data throughput through the narrowband and broadband return channels for the data streams leaving the transmissions server (5).

18. Method according to Claim 17, in which the network management entity is designed as control software which is integrated into the transmissions server (5) and determines the utilization of the two return channel connections by the two outgoing data streams, in particular with reference to expected transmission times to the terminal and/or with reference to other current criteria such as the costs of the data transmission.

19. Method according to at least one of the preceding claims, in which the data stream that is transmitted using narrowband is transmitted to the terminal via a packet switching network and POTS/ISDN lines.

20. Method according to Claim 19, wherein the data are transmitted from the transmissions server via the packet switching network to a dial-in node (31) of the terminal (1) into the packet switching network, and from the dial-in node (31) to the terminal (1).

21. Method according to Claim 20, wherein the transmissions server (5) is not a dial-in node into the packet switching network.

22. Method according to at least one of the Claims 1 to 19, in which the data stream that is transmitted using narrowband is transmitted to the terminal via a packet switching network and an xDSL connection.

23. Method according to Claim 22, wherein the data is transmitted from the transmissions server (5) via the packet switching network (3) to an xDSL interface node (2) of the terminal (1) onto the packet switching network (3), and then from the xDSL interface node (2) to the terminal (1) by means of xDSL data transmission techniques.

24. Method according to Claim 23, wherein the transmissions server (5) is not arranged in an xDSL interface node.

25. Method according to at least one of the preceding claims, in which at least one data transmission section of the return-channel transmission path of the data stream which is transmitted via a broadband network is realized by a satellite transmission link.

26. Method according to Claim 25, wherein the data which are transmitted via a satellite transmission link are received by means of a satellite dish (11) that is assigned to the terminal (1) or to a local network to which the terminal (1) belongs.

27. Method according to Claim 25, wherein the data which are transmitted via a satellite transmission link are received by means of a cable head station (10) of a cable operator, entered into the corresponding cable network and received by the terminal via cable.

28. Method according to Claim 25, wherein the data which are transmitted via a satellite transmission link are routed to the reception antennas of a DVB-T service provider and received at the terminal (1) via a DVB-T channel.

29. Method according to Claim 25, wherein the data which are transmitted via a satellite transmission link are routed to the reception antennas of a WLAN and/or radio network and/or electricity network service provider and received at the terminal in accordance with the relevant protocols.

30. Method according to at least one of the preceding claims, in which at least one data transmission section of the return-channel transmission path of the data stream which is transmitted via a broadband network is realized by a TV cable transmission link.

31. Method according to at least one of the preceding claims, in which the set of data transmission sections of the return-channel transmission path of the data stream which is transmitted via a broadband network to the terminal (1) includes a TV cable transmission link and a WLAN transmission link.

32. Method according to at least one of the preceding claims, in which the set of data transmission sections of the return-channel transmission path of the data stream which is transmitted via a broadband network to the terminal (1) includes a satellite transmission link and a WLAN transmission link.

33. Method according to at least one of the preceding claims, in which the set of data transmission sections of the return-channel transmission path of the data stream which is transmitted via a broadband network to the terminal (1) includes a satellite transmission link, a TV cable transmission link and a WLAN transmission link.

34. Method according to at least one of the preceding claims, in which the application server (4) is connected to a packet switching network (3).

35. Method according to at least one of the preceding claims, in which the transmitted data belong to a specific application which is executed between the application server (4) and the terminal (1).

36. Method according to at least one of the preceding claims, in which an L7 connection or L7 association exists between the application server (4) and the terminal (1), and the data transmission takes place in the context of this L7 connection or L7 association.

37. Telecommunications arrangement for transmitting data on different transmission paths in a communication transaction between an application server (4) and a terminal, wherein this transmission to the terminal, in each case on at least one of the route sections involved, simultaneously takes place both using narrowband via at least one narrowband network and using broadband via at least one broadband network, comprising:
a) means for transmitting data (return-channel data), which are intended for the terminal (1), from the application server (4) to a transmissions server (5);
b) means arranged within the transmissions server (5) for dividing all data which are received from the application server and must be transmitted to the terminal (1) into at least two data streams, wherein the division into two data streams takes place as soon as data which must be transmitted to the terminal (1) are present at the transmissions server (5);
c) means for transmitting at least one data stream from the transmissions server (5) to the terminal (1) on at least one route section of a currently used transmission path via at least one narrowband network (3); and
d) means for simultaneously transmitting the at least one further data stream from the transmissions server (5) to the terminal (1) on all data transmission sections of a currently used transmission path via at least one broadband network (8).

38. Transmissions server for carrying out the method according to Claim 1, comprising an entity (54) which divides all incoming data and/or data which are generated in the transmissions server (5) into two data streams, wherein the data of one data stream are routed to an output (52) which is connected to a narrowband telecommunications infrastructure or a packet switching network and the data of the other data stream are routed to an output (53) which is connected to a broadband telecommunications infrastructure.

39. Transmissions server according to Claim 38, in which the bandwidth of the two data streams is statically predetermined for the entire duration of a data transmission.

40. Transmissions server according to Claim 38, in which the bandwidth of the two data streams is dynamically adaptable.

41. Transmissions server according to Claim 39 or 40, including control software which determines the division, of the data which must be transmitted, onto the two outgoing data streams.

## Revendications

1. Procédé pour la transmission de données sur différentes voies de transmission dans un processus de communication entre un serveur d'application et un terminal, cette transmission vers le terminal s'effectuant au moins sur chacun des tronçons impliqués, à la fois en bande étroite via au moins un réseau à bande étroite mais également en large bande via au moins un réseau à large bande, avec les étapes suivantes :
a) transmettre des données (données de canal de retour) destinées au terminal (1) depuis le serveur d'application (4) à un serveur de transmission (5) ;
b) dans le serveur de transmission (5) répartir toutes les données à transmettre au terminal (1), reçues depuis le serveur d'application en au moins deux flux de données, la répartition en deux flux de données ayant lieu lorsque les premières données à transmettre au terminal (1) arrivent au serveur de transmission (5) ;
c) transmettre au moins un flux de données depuis le serveur de transmission (5) au terminal (1) au moins sur un tronçon d'une voie de transmission utilisée à cet effet, via au moins un réseau à bande étroite (3) ; et
d) en même temps que cela, transmettre au moins l'autre flux de données depuis le serveur de transmission (5) au terminal sur toutes les sections de transmission de données d'une voie de transmission utilisée à cet effet, via au moins un réseau à large bande (8).

2. Procédé selon la revendication 1, dans lequel un processus de communication a lieu entre un serveur d'application (4) et un terminal (1) par l'intermédiaire d'un serveur proxy (6), de sorte que les données sont transmises du terminal au serveur d'application (4) et du serveur d'application (4) au terminal par l'intermédiaire du serveur proxy (6), sachant que les données destinées au terminal (1) sont dans un premier temps acheminées depuis le serveur d'application (4) jusqu'au serveur proxy (6) puis du serveur proxy (6) jusqu'au serveur de transmission (5) qui entreprend alors la répartition en deux flux de données au moins.

3. Procédé selon la revendication 2, dans lequel le serveur de transmission (5) ou au moins sa fonctionnalité est intégré dans le serveur proxy (6).

4. Procédé selon la revendication 2 ou 3, dans lequel le serveur proxy (6) comprend en outre un serveur cache (61) et pour le cas où les données destinées au terminal (1) seraient déjà contenues dans le serveur cache (61), celles-ci seraient envoyées directement depuis le serveur proxy (6) au terminal, les données étant acheminées jusqu'au serveur de transmission (5) et réparties par celui-ci en deux flux de données.

5. Procédé selon la revendication 1, dans lequel un processus de communication a lieu entre un serveur d'application (4) et un terminal (1) par l'intermédiaire d'un serveur de tunnel, le terminal transmettant une seconde adresse au serveur de tunnel dans le cadre d'un protocole de tunnel, et le serveur de tunnel communiquant sous cette seconde adresse du terminal (1) avec le serveur d'application (4), et des données destinées au terminal (1) étant acheminées dans un premier temps depuis le serveur d'application (4) jusqu'au serveur de tunnel puis du serveur de tunnel jusqu'au serveur de transmission (5) qui procède alors à la répartition en deux flux de données au moins.

6. Procédé selon la revendication 5, dans lequel le serveur de transmission (5) ou au moins sa fonctionnalité est intégré dans le serveur de tunnel.

7. Procédé selon la revendication 1, dans lequel dans un processus de communication entre un serveur d'application (4) et un terminal (1) en ce qui concerne les données à transmettre depuis le terminal (1) au serveur d'application (4), une transmission de données s'effectue sans l'intermédiaire d'un serveur déterminé via au moins un réseau à bande étroite, en particulier le réseau POTS/ISDN, étant précisé que les données destinées au terminal sont acheminées depuis le serveur d'application (4) de nouveau sans l'intermédiaire d'un serveur déterminé jusqu'au serveur de transmission (5).

8. Procédé selon au moins l'une quelconque des revendications précédentes, dans lequel également des données qui sont transmises pour établir une liaison L7 ou une association L7 entre le serveur d'application et le terminal (1) et/ou entre le serveur de transmission et le terminal (1), sont réparties par le serveur de transmission (5) en deux flux de données et transmises à la fois via le réseau à bande étroite et le réseau à large bande.

9. Procédé selon au moins l'une quelconque des revendications précédentes, dans lequel le serveur de transmission (5) est raccordé au moins à un réseau à commutation de paquets et au moins à un réseau à large bande.

10. Procédé selon la revendication 9, dans lequel le serveur de transmission (5) et/ou le terminal (1) est toutefois disposé en dehors des réseaux correspondants.

11. Procédé selon au moins l'une quelconque des revendications précédentes, dans lequel le terminal (1) est relié de façon bidirectionnelle à au moins un réseau à bande étroite et de façon unidirectionnelle pour la réception de données à au moins un réseau à large bande.

12. Procédé selon au moins l'une quelconque des revendications précédentes, dans lequel au moins les deux flux de données sont réunis dans le terminal (1) ou dans un serveur du terminal par un point de raccordement à large bande.

13. Procédé selon au moins l'une quelconque des revendications précédentes, dans lequel le volume des données à transmettre depuis le serveur d'application (4) jusqu'au terminal (1) est supérieur au volume des données à transmettre du terminal (1) au serveur d'application (4).

14. Procédé selon au moins l'une quelconque des revendications précédentes, dans lequel toutes les données arrivant au serveur de transmission (5) sont transmises au terminal (1) via les deux flux de données au moins.

15. Procédé selon au moins l'une quelconque des revendications précédentes, dans lequel le débit de données à travers le canal de retour à bande étroite et le débit de données à travers le canal de retour à large bande sont prédéterminés statiquement pour les flux de données partant du serveur de transmission (5) pour la durée totale de la transmission de données.

16. Procédé selon au moins l'une quelconque des revendications 1 à 15, dans lequel le débit de données à travers le canal de retour à bande étroite et le débit de données à travers le canal de retour à large bande est adaptable dynamiquement pour les flux de données partant du serveur de transmission (5).

17. Procédé selon la revendication 16, dans lequel une gestion de réseau ou un utilisateur détermine de façon dynamique le débit de données à travers le canal de retour à bande étroite et à large bande pour les flux de données partant du serveur de transmission (5).

18. Procédé selon la revendication 17, dans lequel la gestion de réseau est conçue comme logiciel de commande qui est intégré dans le serveur de transmission (5) et qui détermine l'utilisation des deux liaisons du canal de retour par les deux flux de données sortant, en particulier à l'aide des temps de transmission à escompter jusqu'au terminal et/ou à l'aide d'autres critères actuels tels que le coût de la transmission de données.

19. Procédé selon au moins l'une quelconque des revendications précédentes, dans lequel le flux de données transmis par bande étroite est transmis au terminal via un réseau à communication de paquets et via des lignes POTS/ISDN.

20. Procédé selon la revendication 19, dans lequel les données sont transmises du serveur de transmission via le réseau de communication par paquets jusqu'à un noeud de commutation (31) du terminal (1) dans le réseau à commutation de paquets et depuis le noeud de commutation (31) jusqu'au terminal (1).

21. Procédé selon la revendication 20, dans lequel le serveur de transmission (5) n'est pas un noeud de commutation dans le réseau à commutation de paquets.

22. Procédé selon au moins l'une quelconque des revendications 1 à 19, dans lequel le flux de données transmis par bande étroite est transmis au terminal via un réseau à commutation de paquets et via une connexion xDSL.

23. Procédé selon la revendication 22, dans lequel les données sont transmises depuis le serveur de transmission (5) via le réseau à commutation de paquets (3) jusqu'à un noeud de raccordement xDSL (2) du terminal (1) au niveau du réseau à commutation de paquets (3), et ensuite du noeud de raccordement xDSL (2) au terminal (1) au moyen de la technique de transmission de données xDSL.

24. Procédé selon la revendication 23, dans lequel le serveur de transmission (5) n'est pas disposé dans un noeud de raccordement xDSL.

25. Procédé selon au moins l'une quelconque des revendications précédentes, dans lequel au moins une section de transmission de données de la voie de transmission du canal de retour du flux de données transmis via un réseau à large bande est réalisée par un trajet de transmission par satellite.

26. Procédé selon la revendication 25, dans lequel les données transmises via un trajet de transmission par satellite sont reçues au moyen d'une antenne parabolique (11) associée au terminal (1) ou à un réseau local auquel appartient le terminal (1).

27. Procédé selon la revendication 25, dans lequel les données transmises via un trajet de transmission par satellite qui sont reçues au moyen d'une station de tête câblée (10) d'un exploitant du réseau câblé, sont entrées dans le réseau câblé correspondant et sont reçues par le terminal via le câble.

28. Procédé selon la revendication 25, dans lequel les données transmises via un trajet de transmission par satellite sont acheminées jusqu'à l'antenne de réception d'un fournisseur de services DVB-T, et sont reçues par le terminal (1) via un canal DVB-T.

29. Procédé selon la revendication 25, dans lequel les données transmises via un trajet de transmission par satellite sont acheminées jusqu'à l'antenne de réception d'un fournisseur de services WLAN et/ou du réseau de radiocommunications et/ou du réseau électrique, et sont reçues en fonction des protocoles respectifs au niveau du terminal.

30. Procédé selon au moins l'une quelconque des revendications précédentes, dans lequel au moins une section de transmission de données de la voie de transmission du canal de retour du flux de données transmis via un réseau à large bande est réalisée par un trajet de transmission par câble TV.

31. Procédé selon au moins l'une quelconque des revendications précédentes, dans lequel l'association des sections de transmission de données de la voie de transmission du canal de retour du flux de données transmis via un réseau à large bande jusqu'au terminal (1) comprend un trajet de transmission par câble TV et un trajet de transmission WLAN.

32. Procédé selon au moins l'une quelconque des revendications précédentes, dans lequel l'association des sections de transmission de données de la voie de transmission du canal de retour du flux de données transmis via un réseau à large bande jusqu'au terminal (1) comprend un trajet de transmission par satellite et un trajet de transmission WLAN.

33. Procédé selon au moins l'une quelconque des revendications précédentes, dans lequel l'association des sections de transmission de données de la voie de transmission du canal de retour du flux de données transmis via un réseau à large bande jusqu'au terminal (1) comprend un trajet de transmission par satellite, un trajet de transmission par câble TV et un trajet de transmission WLAN.

34. Procédé selon au moins l'une quelconque des revendications précédentes, dans lequel le serveur d'application (4) est relié à un réseau à commutation de paquets (3).

35. Procédé selon au moins l'une quelconque des revendications précédentes, dans lequel les données transmises font partie d'une application déterminée, qui est exécutée entre le serveur d'application (4) et le terminal (1).

36. Procédé selon au moins l'une quelconque des revendications précédentes, dans lequel il existe une liaison L7 ou une association L7 entre le serveur d'application (4) et le terminal (1), et la transmission des données s'effectue dans le cadre de cette liaison L7 ou de cette association L7.

37. Dispositif de télécommunication pour la transmission de données sur différentes voies de transmission dans un processus de communication entre un serveur d'application (4) et un terminal, cette transmission vers le terminal s'effectuant au moins sur chacun des tronçons impliqués, à la fois en bande étroite via au moins un réseau à bande étroite mais également en large bande via au moins un réseau à large bande, avec :
a) des moyens pour transmettre des données (données de canal de retour) destinées au terminal (1) depuis le serveur d'application (4) à un serveur de transmission (5) ;
b) des moyens disposés dans le serveur de transmission (5) pour répartir toutes les données à transmettre au terminal (1), reçues depuis le serveur d'application en deux flux de données au moins, la répartition en deux flux de données ayant lieu lorsque les premières données à transmettre au terminal (1) arrivent au serveur de transmission (5) ;
c) des moyens pour transmettre au moins un flux de données depuis le serveur de transmission (5) jusqu'au terminal (1) au moins sur un tronçon d'une voie de transmission utilisée, via au moins un réseau à bande étroite (3) ; et
d) des moyens pour transmettre en même temps au moins l'autre flux de données depuis le serveur de transmission (5) jusqu'au terminal (1) sur toutes les sections de transmission de données d'une voie de transmission utilisée, via au moins un réseau à large bande (8).

38. Serveur de transmission pour mettre en oeuvre le procédé selon la revendication 1 avec un dispositif (54) qui répartit en deux flux de données toutes les données entrantes et/ou générées dans le serveur de transmission (5), les données de l'un des flux de données étant acheminées jusqu'à une sortie (52) reliée à une infrastructure TK à bande étroite ou reliée à un réseau à commutation de paquets, et les données de l'autre flux de données étant acheminées jusqu'à une sortie (53) reliée à une infrastructure TK à large bande.

39. Serveur de transmission selon la revendication 38, dans lequel la largeur de bande des deux flux de données est prédéterminée statiquement pour la durée totale d'une transmission de données.

40. Serveur de transmission selon la revendication 38, dans lequel la largeur de bande des deux flux de données est adaptable dynamiquement.

41. Serveur de transmission selon la revendication 39 ou 40, comportant un logiciel de commande qui détermine la répartition des données à transmettre en deux flux de données sortant.
